# EUROPEAN PATENT APPLICATION

(11) **EP 4 295 728 A1**
(43) Date of publication of application: **27.12.2023**
(21) Application number: 21931275.8
(22) Date of filing: 17.11.2021
(51) Int. Cl.: A47G 27/02, D05C 17/02, B32B 27/02, B32B 27/36, B32B 25/12, B32B 25/10, B32B 3/08, D06C 7/02

(54) **CHENILLE CARPET AND PREPARATION METHOD THEREFOR**

(30) Priority: 17.03.2021 CN 202110288049; 22.07.2021 CN 202110833327
(71) Applicant: Kunshan CCF Home TExtile Co., Ltd., Jiangsu 215345 (CN)
(72) Inventor: CAO, Shunlin, Kunshan, Jiangsu 215345 (CN)
(74) Representative: Chung, Hoi Kan
(86) International application number: PCT/CN2021/131299
(87) International publication number: WO 2022/193701

(57) **Abstract**

A chenille carpet and a preparation method therefor. The preparation method comprises the following steps: S 1, using a chenille yarn for tufting a base fabric layer (2) to form a carpet layer (1) on one side of the base fabric layer (2), so as to prepare a carpet blank; S2, placing the carpet blank in step S 1 into a ball rolling machine for heating, rolling, turning, steam softening treatment and natural cooling; and S3, subjecting the carpet prepared in step S2 to bottom covering processing. The preparation method has the advantages of low water consumption, low energy consumption, being time saving and being environmentally friendly, and the prepared chenille carpet has good fluffiness and fullness.

## Description

### TECHNICAL FIELD

The present invention relates to the field of textiles, in particular to a chenille carpet and a preparation method therefor.

### BACKGROUND

Chenille yarns are spun by taking two strands as core threads, and sandwiching feather yarn by twisting. The chenille yarns have the characteristics of plump down, soft hand feel, thick fabric and light texture, are widely used in the field of home textiles, and are prepared into various carpets by combining with tufting and knitting processes, so as to enrich home experience for people.

The general preparation process route for the chenille carpets currently on the market is as follows: spinning-tufting or circular knitting machine weaving-dropping in water, dyeing and finishing-dehydrating-drying and setting-back sizing (compounding)-cutting-sewing, the process provides the spun yarn as a first layer by tufting in combination with a second layer of a base fabric to prepare a carpet blank, this carpet is then prepared by dyeing the carpet in a dyeing apparatus such as an overflow jar or a flat jar for 100 minutes or so according to the desired color shade, to prepare a carpet having various colors, dry setting by a loose dryer after the carpet is placed in a dryer for 20 minutes or so, finally cut and stitched to make carpet. As Chinese invention CN101139788A discloses a glossy chenille carpet blank and production process comprising the following steps: chenille yarn preparation-weaving chenille yarn into chenille carpet greige-dyeing-finishing-dewatering-drying-setting, the production process is long route, cost and energy consuming.

In the current general chenille carpet preparation process, the dyeing process requires the use of large amounts of water as a carrier for the dye to bind to the yarn fiber molecules or to enter the fiber molecular interstices to prepare a wide variety of colors; taking overflow cylinder dyed chenille carpet as an example, a bath ratio of 1:10 was used. Dyeing a 200 KG chenille carpet requires consumption of 2000 KG of water to make the dye liquor, although the cleaning and recycling of water resources in dyeing plants is possible, the large water loss is undoubtedly a huge waste, and the treatment of sewage waters uses a large amount of chemicals and remains polluting the environment. The dyeing process requires a huge amount of thermal energy to ensure that the process is performed smoothly; the general dyeing process is normal temperature water ramped up to 70-80°C by a heating rate of 2°C/min, then ramped up to 100-130°C by a heating rate of 1°C/min, followed by a holding operation of 20-30 min, and finally a cooling treatment; the stained carpet blank must also be dehydrated and dried; the entire procedure is time consuming, much energy and water consumption are great. Chenille made with color spinning is subjected to water fall treatment, except without dye, the rest of the process is the same as above, which results in significant residual waters and chemicals. Currently available chenille carpet preparation processes add 0.8 g/L leveling agent, dyes proportioned accordingly, and 1-3% softener and reductive cleaning agents; although the prepared product feels softer on hand, however, the addition of chemical aids causes some damage to the environment. As Chinese invention patent CN 108301244A, disclosed is a method of preparing a superabsorbent dwarf colored chenille pad, wherein comprising the step of staining a geomat embryo body, a pretreatment soak before dyeing, pre-foaming prior to the addition of Dacron Mat raw body into pre-softened water prior to use, maintaining a 60 degree steam chamber temperature ramp to 90°C every 2°C/min in the preheating steam chamber, steam bubbling continued 10 min-l°C/ min ramp to 110°C after temperature stabilization around 90°C, steam bubbles for 10 minutes, 3°C/min ramp down to 60°C and then removed for shelf ready dyeing. Include disperse dyes, leveling agents, softeners, lubricants, finishes, etc. in the ingredients of the dye ink. Such dyeing process is time consuming, energy consuming, water consuming, and chemical aids damage the environment.

In addition, chenille carpets currently on the market have a high shrinkage of the pile, the pile fibres are arranged tightly, the fibers assume a straight state, pile loft and fullness are not good enough, not strong enough water absorption, the inventor's prior invention CN104783632A discloses a process for the profiling of an India manual chenille pad comprising in sequence the following process steps: a dyed chenille yarn--chenilbase treatment--tufted--anti-slip collation--lock treatment, which prepares a chenille carpet that is loop-tipped with less than ideal loft, fullness and water absorption.

Accordingly, there is urgent need for a preparation method for chenille carpets to overcome above-mentioned problems of time-consuming, high energy consumption, high water usage, pollution of environment, insufficient loft, and like that exist with prior art.

### SUMMARY

In order to solve the above-mentioned technical problem, the present invention provides a chenille carpet and a process for preparing the same.

The object of the present invention is achieved by the following technical solutions:
A chenille carpet comprising a carpet layer, a base fabric layer and a backing layer, the base fabric layer being a chemical fiber knit or woven fabric base fabric layer, a composite base fabric layer formed of chemical fiber knit or woven fabric and/or needle-punched non-woven, or a spunbond non-woven base fabric layer; the carpet layer comprises a loop pile tufted layer formed on one side of the base fabric layer after tufting process on the base fabric layer using chenille yarns; the backing layer comprises a layer of hot melt glue, thermoplastic elastomer, foamed latex, or composite other non-slip functional fabric and material for non-slip treatment; the tufted layer loop is formed into a particulate pile by heating, rolling with a ball rolling machine, steam softening treatment, cooling.

Therein, preferably, tufted layer loop pile's height is 3.5-45 mm.

Preferably, the types of base fabric layers include:
The composite base fabric layer is a needle-punched chemical fiber non-woven having a weight of 50-500 g/m2, the composite base fabric layer is a chemical fiber knit or woven fabric having a weight of 70-350 g/m2;
The knit or woven base fabric layer has a weight of 50-350 g/m2;
The weight of spunbond non-woven base fabric layer was 50-350 g/m2.

Preferably, raw material of base fabric layer may be one or more of chemical fibers, natural fibers, and blended fibers.

Preferably, the chenille yarn of the carpet layer is novel fancy yarn spun by taking two strands spun by staples or filaments with different fineness as core threads, and twisting with different twists to cut feather yarn with different fineness into different widths and sandwich the feather yarn between the two core threads.

Preferably, the chenille yarns of the carpet layer are made of one or more of fibers such as polyester, nylon, cotton, or blended fibers;
Preferably, the chenille yarn of the carpet layer has a yarn count of: 2.6-0.2 Nm;
Preferably, the chenille yarn of the carpet layer has a twist of: 280 T/M-800 T/M;
Preferably, the chenille yarn of the carpet layer has a feather yarn count of: 30D-600D;
Preferably, chenille yarns of carpet layer have a feather yarn width of: 2-15 mm.

The present invention also provides a preparation method for a chenille carpet as previously described, the process comprising the steps of:
S1. using a chenille yarn for tufting a base fabric layer to form a carpet layer on one side of the base fabric layer, so as to prepare a carpet blank;
S2. placing the carpet blank of step S1 into a ball rolling machine for heating, rolling, tumbling, steam softening treatment, and natural cooling; and
S3. subjecting the carpet prepared in step S2 to bottom covering processing, i.e. with hot melt glue, thermoplastic elastomer, foam glue or composite other backing material alone or with non-slip treatment.

Wherein preferably the ball rolling machine type in step S2 comprises a steam type ball rolling machine, an electrically heated diathermic oil type ball rolling machine, or a natural gas heated oil type ball rolling machine;
Preferably, in step S2, a rolling box is arranged inside the ball rolling machine, similar to the structure of a domestic drum washer, the box of the rolling box distributes a plurality of heat dissipation holes for efficient transmission and uniform diffusion of heat during step S2;
Preferably, the rolling boxes in the ball rolling machine in step S2 can be set to be in forward rotation and reverse rotation, the rotational speed can be set at a fixed or variable frequency speed as required, the rolling speed can be adjusted in the range of 10 r/min to 30 r/min, the forward rotation and reverse rotation time can be set as required, the rotation time is 5 min to 120 mi n, and the forward rotation and reverse rotation directions can be automatically switched in a uniform cycle;
Preferably, in step S2, the carpet blank of the carpet is in a naturally relaxed state in a bin of the ball rolling machine, the carpet blank of the carpet is free to fall after the carpet blank of the carpet reaches a certain height of the inner wall of the bin during rotation with the bin in the ball rolling machine and initiates the next rotation, back and forth;
Preferably, during heating, rolling of the ball rolling machine in step S2, the temperature setting ranges from 70°C to 200°C;
Preferably, the steam softening treatment time in step S2 is between 5 s and 600 s;
Preferably, the cooling process in step S2 is to turn off the heating program, the fan naturally reduces the temperature of the carpet blank through the inner loop, and the internal box of the roller machine is still operating in an automatic uniform loop switching the direction of rotation until the cooling program is completed;
Preferably, all actions in step S2 can be operated continuously by manual or automated procedures.

Alternatively, step S2 of a preparation method for chenille carpet of the present invention may be:
S2. Placing carpet blank of step S1 into shaker dryer setting machine, blowing by blower of setting machine and wind-drawing carpet blank into S-type air duct inside setting machine, fluffing and heating carpet by dryer and high frequency rubbing of carpet with S-type air duct during fluffing of carpet.

Wherein preferably the shaker dryer setting machines of step S2 include shaker dryer setting machines of the steam type, shaker dryer setting machines of the electrically heated diathermic oil type, shaker dryer setting machines of the natural gas heated oil type;
Preferably, the shaker dryer setting machine in step S2 has two or more powerful fans with motor power of 20 KW to 40 KW and fan speed of 100 r/min to 1500 r/min;
Preferably, in step S2 the shaker dryer setting machine is blown by means of a blower, which is the source of power delivered by the setting machine, to create a wind force to bring the carpet into the setting machine;
Preferably, the first half of the shaker dryer setting machine in step S2 is an S-curved wind duct unit, the second half is a mesh belt conveyor unit, the first half functions as a power source, the second half functions as conveying, guiding, while the shaker dryer setting machine transmit the carpet blank relying on wind forces, the strong wind and the S-bend structure of the air duct form a fluffing state to the carpet blank body in S1, and the S-type air duct structure forms a friction state with the carpet blank;
Preferably, the temperature control range of the shaker dryer setting machine in step S2 is 100°C to 200°C;
Preferably, run speed of shaker dryer setting machine in step S2 is between 0.5 m/min and 10 m/min.

Alternatively, step S2 of a preparation method for chenille carpet of the present invention may be:
S2. The carpet blank of step S1 is placed into steam dryer and carpet blank is heated roll dried.

Wherein, preferably, the steam dryer profile and internal configuration in step S2 is similar to that of a large industrial washer: the internally arranged drum, and a plurality of heat dissipation holes are distributed in walls;
Preferably, the steam dryer in step S2 can accommodate a carpet blank weight of 15 KG to 250 KG;
Preferably, the steam dryer drum rotation speed in step S2 is from 29 r/min to 35 r/min;
Preferably, steam dryer heating temperature in step S2 is between 70°C and 180°C.

Alternatively, step S2 of a preparation method for chenille carpet of the present invention may be:
S2. The carpet blank of step S1 was placed into GQ-3500Z steam-type ball rolling machine internal drum for high temperature rubbing, ball rolling treatment.

In addition, carpet blank may be sprayed with softener processing at levels of 5-40 g/L softener working fluid and 50-200 g/m2 softener working fluid used after completion of step S2 depending on usage requirements.

Additionally, the chenille carpet prepared according to the present invention can be used in secondary processes such as printing to obtain new products.

The present invention has the following advantageous effects:
The carpet of the present invention does not require significant water resources to be consumed during manufacture; no the use of dyeing tanks during manufacture, nor the use of chemical aids such as reducing cleaners, leveling agents, dyes, smoothing agents and the like used in dyeing ordinary chenille carpets to avoid environmental pollution; the carpet preparation process is short process route and does not consume significant energy; by placing the carpet blank into a ball rolling machine, the carpet blank rotates with the internal rollers of the ball rolling machine and rubs at high temperature to cause the chenille feather yarn fibers to shrink and puff to deform; the core yarn upon high-temperature frictional shrinkage entrains the carpet blank of the carpet pile shrinkage and self-twists into a particulate shape, the feather yarn assumes a natural curled state upon high-temperature frictional shrinkage resulting in higher loft and fullness of the carpet layer.

### BRIEF DESCRIPTION OF DRAWINGS

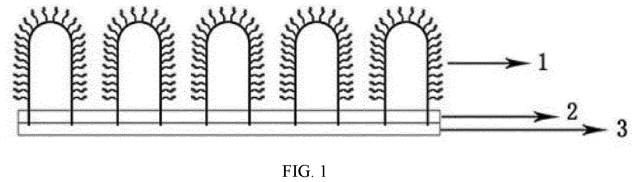

FIG. 1 is a schematic representation of the structure of the chenille carpet of the present invention;

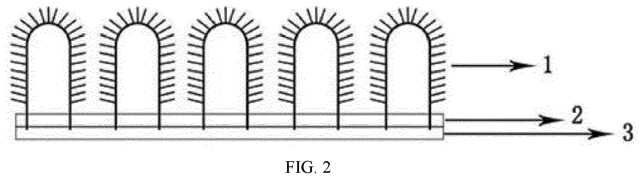

FIG. 2 is a schematic representation of the structure of chenille carpet made by the general process technology; and

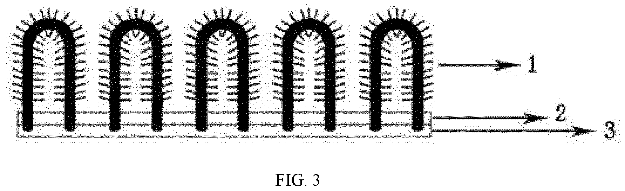

FIG. 3 Schematic representation of structure of inventor's prior invented chenille carpet.

Among them, 1-carpet layer, 2-base fabric layer, 3-backing layer.

### DETAILED DESCRIPTION OF THE EMBODIMENTS

The present invention will now be described in detail in conjunction with examples. The following examples will help those skilled in the art to further understand the invention, but do not in any way limit the invention. It should be noted that several adaptations and modifications may also be made by those skilled in the art without departing from the inventive concept; these all fall within the scope of protection of the present invention.

The present invention provides a chenille carpet and a preparation method therefor.

The chenille carpet comprising a carpet layer, a base fabric layer and a backing layer, the base fabric layer being a chemical fiber knit or woven fabric base fabric layer, a composite base fabric layer formed from chemical fiber knit or woven fabrics and/or needle-punched non-woven, or a spunbond non-woven base fabric layer; the carpet layer comprising a looped tufted layer formed on one side of the base fabric layer after tufting process on the base fabric layer using chenille yarns, the backing layer comprises a layer of hot melt glue, thermoplastic elastomer, foamed latex or composite other non-slip functional fabric and material for non-slip treatment then process to form a particulate carpet layer, in particular a particulate pile formed after shaking, shaking or rubbing at a certain temperature; heating, rolling with ball rolling machine, steam softening treatment, cooling the tufted layer loop to form particulate piles. Wherein the cooling can be natural cooling, strong cooling, or another achievable cooling.

The preparation method for the chenille carpet comprises the steps of:
A. preparing yarns: pick color spun yarn or cotton yarn for feather yarn, regular polyester spun yarn or cotton yarn for cored yarn for chenille yarn, make drum yarn on spooler;
B. Making a base fabric layer: making a base fabric layer with a base fabric comprising one or more of a woven base fabric, a spunbond non-woven base fabric, a polyester staple and polypropylene woven fabric composite base fabric, and the like;
C. Weaving: Hang chenille yarn from Step A on tufter creel, optionally with one of the base fabric layers from Step B, weave using tufters/rounders at various gauge to prepare a looped fleece carpet;
D. Ball Rolling Treatment: The carpet blank prepared in Step C is placed into a ball rolling machine for treatment according to the procedure of dry drying-steam softening treatment-retentate cooling treatment or by setting machine for treatment of carpet blank to form the loop pile of the carpet layer into a particulate pile;
E, backsize, undersize: the woven loop chenille carpet is underlapped, i.e. The carpet is underlapped with hot melt glue, thermoplastic elastomer, foamed glue or composite other individual backing material or backing material with anti-slip handling functi on;
F. Cropping process: the carpet prepared in step E is subjected to a cropping process according to dimensional requirements;
G. Sewing process: The carpet cut in step F is subjected to hemming or sewing process using hemming machine.

Examples of specific applications are provided in the following Examples:

### Example 1:

The present example provides a chenille carpet and a preparation method therefor, the preparation steps:
S1. preparing yarns: selecting Dacron 16S/2 as a core yarn, and 150D/144F DTY as feather yarn, with a twist of 530 T/M, a feather yarn width of 11 mm, and preparing into a color spun chenille yarn, with a chenille yarn count of 0.45 Nm;
S2. preparing a base fabric layer: selecting a polyester filament woven base fabric, having a base fabric gram weight of 270 g/m², weft and warp: 23.2*15.3/cm and a yarn count of 300D/96FX3 strands;
S3. Weaving: selecting a ring tufting machine with a gauge of 3/8, setting tuft pile height of 15 mm, carpet blank weight of 850 g/m², tufting using the base fabric layer at 270 g/m² in step S2;
S4. Rolling Ball Treatment: The tufted carpet blank prepared in step S3 was placed with 50KG inside the internally arranged drum of a GQ-3500Z steam roller, setting the internal drum rotation speed of the ball rolling machine to 18 r/min, the ball rolling machine heating temperature was set to 100°C, the heating and rolling time was set to 7 minutes, positive, reversal times of 3.5 minutes each, steam softening treatment: steam temperature set at 100°C, steam release time of 20 s, steam and heating block turned off, natural cooling to 70°C, cooling time of 5 min, whole process carpet blank was naturally loose inside the roller inside the ball rolling machine, unrestrained by external force, and then ball rolling machine treated carpet blank was removed;
S5, Adhesive Back, Overlay: The carpet after the end of step S4 is subjected to a non-slip treatment on the back, roll applied on the back of the carpet using SEBS hot melt glue with specification 1135-B at glue level of 40 g/m²;
S6. Cutting treatment: Cutting the carpet after backsizing to the desired size;
S7. Sewing treatment: The cut treated carpet was edged using an edging machine, edging was Dacron felt, weight was 120 g/m2, edging width was 48 mm.

### Example 2:

The present example provides a chenille carpet and a preparation method therefor, the preparation steps:
S1. preparing yarns: select core yarn as polyester 15S/2, feather yarn 150D/288F DTY, twist 540 T/M, feather yarn width 8mm, chenille yarn count 0.7 Nm;
S2. Make a base fabric layer: select a polyester filament woven base fabric, has a base fabric gram weight of 130 g/m², weft thread: weft thread 42*27/inch, yarn count: 300D/96F;
S3. Weaving: selecting a loop tufting machine with a gauge of 3/8, setting tuft pile height of 30 mm, carpet blank weight of 1350 g/m², tufting using the base fabric layer at 130 g/m² in step S2;
S4. Rolling Ball Treatment: The tufted carpet blank prepared in step S3 was placed with 50KG inside the internally arranged drum of a GQ-3500Z steam roller, setting the internal drum rotation speed of the ball rolling machine to 18 r/min, the ball rolling machine heating temperature was set to 100°C, the heating and rolling time was set to 15 minutes, positive, reversal time was 7.5 minutes each, steam softening treatment: steam temperature setting 105°C, steam release time 30 s, steam and heating block turned off, natural cooling to 70°C, cooling time 8 min, whole process carpet blank was naturally loose inside the inside rollers of ball rolling machine, unrestrained by external force, and then ball rolling machine treated carpet blank was removed;
S5, Adhesive Back, Overlay: The carpet after the end of step S4 is subjected to a non-slip treatment on the back, roll applied on the back of the carpet using SEBS hot melt glue with specification 1135-B at glue level of 40 g/m²;
S6. Cutting treatment: Cutting the carpet after backsizing to the desired size;
S7. Sewing treatment: The cut treated carpet was edged using an edging machine, edging was Dacron felt, weight was 120 g/m², edging width was 48 mm.

### Example 3:

This example provides a chenille carpet and a preparation method therefor, the preparation steps:
S1. preparing yarns: pick feather yarn 150D/192F DTY, twist 550T/M, feather yarn width 7mm, core yarn Dacron 20S/2, chenille yarn count 1.5 Nm;
S2. Make a base fabric layer: select a polyester filament woven base fabric, having a base fabric gram weight of 180 g/m², and weft thread: 86.5 * 41/inch yarn count of 300D/96F;
S3. Weaving: selecting a ring tufting machine with needle gauge of 1/8, setting tuft pile height of 20 mm, carpet blank weight of 700 g/m², tufting using the base fabric layer at 180 g/m² in step S2;
S4. Rolling Ball Treatment: The tufted carpet blank prepared in step S3 was placed with 50KG inside the internally arranged drum of a GQ-3500Z steam roller, setting the internal drum rotation speed of the ball rolling machine to 20 r/min, ball rolling machine heating temperature was set to 105°C, the heating rolling time was set to 10 minutes, positive, reversal times of 5 minutes each, steam softening treatment: steam temperature set 103°C, steam release time 15 s, steam and heating block turned off, natural cooling to 70°C, cooling time 7 min, whole process carpet blank was naturally loose inside the roller inside the ball rolling machine, unrestrained by external force, and then the ball rolling machine treated carpet blank was removed;
S5. Sizing back, undercoat: the carpet after the end of step S4 is subjected to a non-slip treatment of the bottom back, a non-slip treatment using foamed natural latex; the grammage of the foamed natural latex is 600 g/m²;
S6. Cutting treatment: Cutting the carpet after backsizing to the desired size;
S7. Sewing treatment: The cut treated carpet was edged using an edging machine, edging was Dacron felt, weight was 120 g/m², edging width was 48 mm.

In practical applications, the chenille carpet provided by this embodiment may also be provided with only a backing layer, the materials and manner of preparation of the carpet layer, the carpet layer, and the base fabric layer were as described above, and the chenille carpet formed from the carpet layer and the base fabric layer was used with additional non-slip pads. Examples 4 and 5 describe embodiments of chenille carpet consisting of the base fabric layer and the carpet layer.

### Example 4:

This example provides a chenille carpet and a preparation method therefor, the preparation steps:
S1. Making yarn: selecting core yarn as polyester 15S/2, feather yarn 150D/288F DTY, twist 400T/M, feather yarn width 15mm,
S2. Making a base fabric layer: select a spunbond non-woven base fabric at a base fabric gram weight of 180 g/m²;
S3. Weaving: selecting a ring tufting machine with a gauge of 3/8, setting tuft height of 15 mm, carpet blank weight of 850 g/m², tufting using the base fabric layer at 180 g/m² in step S2;
S4. Rolling Ball Treatment: taking the tufted carpet blank from Step S3 at 1002, accessing a shaker dryer setting machine, the first half of the shaker dryer setting machine is an S-curved wind duct unit, the second half is a mesh belt conveyor unit, the first half functions as a source of power, the second half functions as a conveying, guiding, shaker dryer setting machine while relying on wind to transmit the carpet, the strong wind and the S-type curved structure of the air duct form a fluffing state to the carpet blank body in S 1 and the S-type air duct structure forms a friction state with the carpet such that the loop pile of the carpet layer forms a particulate pile; wherein the temperature control range is 100°C and the operating speed is 0.5 m/mi n;
S5. Cutting treatment: The carpet prepared from S4 is cut to size;
S6. Sewing treatment: The cut treated carpet was edged using an edging machine, edging was Dacron felt, weight was 120 g/m², edging width was 48 mm.

### Example 5:

This example provides a chenille carpet and a preparation method therefor, the preparation steps:
S1. Making yarn: selecting core yarn as polyester 15S/2, feather yarn 150D/288F DTY, twist 400T/M, feather yarn width 15mm,
S2. Make Base fabric layer: select a composite base fabric layer formed with woven fabric, having a base fabric weight of 250 g/m2;
S3. Weaving: selecting a ring tufting machine with a gauge of 3/8, setting tuft pile height of 20 mm, carpet blank weight of 1050 g/m2, tufting using the base fabric layer at 250 g/m2 in step S2;
S4. Rolling Ball Treatment: 100 KG was taken of the tufted carpet blank prepared in step S3, placed inside the internally arranged drum of a GQ-3500D electrically heated diathermic oil type roller, setting the internal drum rotation speed of the ball rolling machine to 20 r/min, the ball rolling machine heating temperature was set to 190°C, heating and rolling time set at 5 minutes, steam softening treatment: steam temperature set 103°C, steam release time 300 s, steam and heating block turned off, natural cooling to 70°C, cooling time 7 mi n, whole process carpet blank was naturally loose inside the roller inside the ball rolling machine, unrestrained by external force, after which the ball rolling machine treated carpet blank was removed;
S5. cutting treatment: the carpet prepared from S4 is cut to size;
S6. sewing treatment: the cut treated carpet was edged using an edging machine, edging was Dacron felt, weight was 120 g/m², edging width was 48 mm.

### Performance Testing

### A. Water absorption energy drip method comparative test

The drip diffusion time mainly reflects the speed of moisture absorption by the textile, verifying water absorption energy; a drop of water was dropped on the surface of the sample from a fixed height, recording the time required for the drop of water to contact the specimen until it had no reflected light on the sample. A chenille carpet made using the General Process with 30 grams and stitches with 11 needles/10 mm was compared to the chenille carpet of Example 2, and the drip method test was conducted at the same height of 20 mm using a measurement cup of 20 ml.

The test result is that the chenille fabric made by the current general process has a reflected light disappearance time of 1 second, while the chenille carpet of the present invention has a reflected light disappearance time of 0.7 seconds, and it follows that the chenille carpet of the present invention has better water absorption than the chenille carpet made by the current general process.

### B. Loft Comparative Test

Loft versus test premise: same chenille yarn, same tufting process woven to obtain same carpet blank.

### Loft versus test requirement terms:

1. Number of carpet piles in the same size range for the current general process made chenille carpet as to the chenille carpet of the present invention;
2. In the same size range, the pile size, including length, width, height, of the chenille carpet made by the current general process as to the chenille carpet of the present invention;

The test sample weaving process was consistent with Example 1: select a polyester filament woven base fabric at 0.45 Nm chenille yarn, tuft gauge 3/8, tuft pile height of 15 mm, tuft stitch of 9 needles/10 cm, and 270 g/m2;

The chenille carpet of Example 1 according to the present invention and the chenille carpet made by the current general process, both 15 cm X 15 cm in size, were compared with 3 test samples each of the carpet made by both processes;

The test data are:
Number of chenille carpet blank pile made by the current general process: Sample 1: 360, Sample 2: 360, Sample 3: 345;
Number of chenille carpet blank piles of the present invention: Sample 1: 270, Sample 2: 255, Sample 3: 270.

In summary, the test data are available: The chenille carpets of the present invention have a lower number of carpet blank piles than the current chenille carpets made by the general process, illustrating that in the making process of the present invention, the shrinkage of the carpet is less relative to the general process chenille carpets, and the loft of the chenille carpets of the present invention is better than the loft of the carpets made by the general process.

The chenille carpet made from Example 1 of the present invention and the chenille carpet made from the current general process, both 20 cm by 20 cm in size, were selected and the two process carpets were compared with 3 pile test points each.

The test data are:
The current general process prepares chenille carpet blank pile sizes:
Sampling pile 1 dimensions: length: 7 mm, width: 7 mm, height: 12 mm;
Sampling pile 2 dimensions: length: 7 mm, width: 6.5 mm, height: 12.5 mm;
Sampling pile 3 dimensions: length: 6.5 mm, width: 6.5 mm, height: 12.5 mm.

The carpet pile size of chenille carpet without water and a finishing aid used in the preparation of the present invention is:
Sampling pile 1 dimensions: length: 9 mm, width: 8.5 mm, height: 14 mm;
Sampling pile 2 dimensions: length: 8.5 mm, width: 8.5 mm, height: 13.5 mm;
Sampling pile 3 dimensions: length: 9 mm, width: 9 mm, height: 14 mm.

In summary, the test data are available: The face pile size of the chenille carpet prepared by the present invention is larger than the pile size of the chenille carpet prepared by the current general process, it is illustrated that in the production process of the present invention, the shrinkage of carpet is less than the shrinkage of the general process chenille carpet, and the loft of the chenille carpet prepared by the present invention is better than the loft of the carpet prepared by the general process.

Combining the above two test items yields that the chenille carpet prepared by the present invention has a better loft than the carpet prepared by the general process.

### C. Process Water Comparison Test

The colorized chenille was prepared using the general process technology:
150D/144F DTY feather yarn, Dacron 16s/2 corewire, 0.45 Nm chenille finished yarn count; a polyester filament woven strobel with a yarn count of 300D/96X3 Strand F and a grammage of 270 g/m² was used; tufting was performed using a tufting machine with a gauge of 3/8, hair height of 15 mm, carpet blank weight of 850 g/m²;
The chenille carpet 100 KG was selected and placed in tub for water wash treatment at 100°C using water weight of 800 KG.

Preparation of colorispun chenille using the fabrication process of the present invention:
As described in Example 1: 150D/144F DTY feather yarn, Dacron 16s/2 corewire, 0.45 Nm chenille finished yarn count; a polyester filament woven strobel with a yarn count of 300D/96X3 Strand F and a grammage of 270 g/m² was used; tufting was performed using a tufting machine with a gauge of 3/8, hair height of 15 mm, carpet blank weight of 850 g/m²;
A 100 KG chenille carpet was also selected for high temperature rubbing, ball rolling, and 20 s steam softening process with steam at temperature of 100°C and steam flow rate of 0.13 m3/s and steam flow of 2.6 m³ converted to water usage of about 1.55 KG (100°C, 1 atm, density of water vapor is 0.59764 KG/m³) in GQ-3500Z steam roller internal drum.

In view of the comparative tests, the fabrication process of the present invention uses less water than the general process technology.

### D. Carpet pile support force comparative test

Using general process technology, core yarn was polyester 15S/2, feather yarn 150D/288F DTY, feather yarn width 8mm, chenille yarn was made by spinning machine with finished yarn count 0.7 Nm; tufted weaving was performed using a polyester filament woven base fabric having a grammage of 130 g/m², a loop tufting machine having a gauge of 3/8, tuft pile height of 30 mm, carpet weight of 1350 g/m², water wash at 105°C in the dyeing tank, to prepare chenille carpet.

Using the preparation process of the present invention, as described in Example 2, the core yarn was polyester 15S/2, the feather yarn was 150D/288 FDTY, the feather yarn width was 8 mm, chenille yarn was made by spinning machine with a finished yarn count of 0.7 Nm; tufted weaving was performed using a polyester filament woven base fabric having a grammage of 130 g/m², a loop tufting machine having a gauge of 3/8, a tuft pile height of 30 mm, an embryonic carpet weight of 1350 g/m², and the tufted embryonic carpet was placed into a GQ-3500Z steam roller inside the internal drum for 15 minutes of heating, rolling friction, 30 s of steam softening treatment, natural cooling to prepare chenille carpet.

### Comparative Test Methods:

1. pieces of each chenille carpet from two processes, with dimensions 50 cm X 50 cm, are placed on a horizontal table;
2. the sampled carpet is pressed against using a press plate of size 50 cm X 50 cm and a weight of 2 KG weight; and
3. height from bottom end of platen to stage is measured, with larger number indicating stronger support force.

Test data: chenille carpet block made by General Process Technology, height of 19 mm from bottom end of platen to horizontal table; a chenille carpet block made by the process according to the present invention was 22 mm in height from the bottom end of the platen to the horizontal table.

In summary, the face pile support force of the chenille carpet made according to the present invention is stronger.

### E. Comparison test for dyeing chemical aid usage

The general process technology is selected to prepare a spun hump chenille carpet and the process of the present invention is used to prepare a spun hump chenille carpet.

General process technology to prepare color spun chenille carpets by water wash treatment:
Chenille feather yarn 150D/144F DTY, Dacron 16s/2 core, Chenille finished yarn count 0.45 Nm; a polyester filament woven strobel with a yarn count of 300D/96X3 Strand F and a grammage of 270 g/m² was used; tufting was performed using a tufting machine with a needle gauge of 3/8, hair height of 15 mm, carpet blank weight of 850 g/m², then a 50 KG carpet blank was taken into a dyeing tank, bath ratio of 1: 10, 500 KG water was added to the overflow tank, warmed to 100°C for water wash treatment, 5 KG softener for gentle treatment, then dewatered, dried and finished to prepare chenille carpet.

The Inventive Preparation Process Prepare Colorized Chenille Carpet by Rolling Ball Treatment:
Example 1: Chenille feather yarn 150D/144F DTY, Corewire Dacron 16s/2, Chenille finished yarn count 0.45 Nm; a polyester filament woven strobel with a yarn count of 300D/96X3 Strand F and a grammage of 270 g/m² was used; tufting is performed using a tufting machine with a gauge of 3/8, a hair height of 15 mm, carpet blank weigh 850 g/m², the 50KG carpet blank was then placed into a GQ-3500Z steam roller internal drum, the rotation speed of the internally arranged drum of the ball rolling machine was set to 18 r/min, the ball rolling machine heating temperature was set to 100°C, the heating rolling time was set to 7 minutes, the positive, inversion times were 3.5 minutes each, steam softening treatment: steam temperature was set to 100°C, steam release time was 20 s, steam and heating modules were turned off, natural cooling to 70°C, cooling time was 5 min, and then finishing was performed to prepare chenille carpet.

Comparing chenille carpets made by the general process technology and the preparation process according to the present invention yields that the chenille carpets made according to the present invention have no dyeing aid such as softener.

Preferred embodiments of the invention are described in detail above. It will be appreciated by those skilled in the art that The present invention is not limited by the embodiments described above, the examples described above and described in the specification are merely to illustrative of the principles of the present invention, but the invention is susceptible to variations and modifications which fall within the scope of what is claimed without departing from the spirit and scope of the invention. The claimed scope of the invention is to be accorded the appended claims.

## Claims

1. A chenille carpet, comprising a carpet layer and a base fabric layer;
wherein the base fabric layer is a chemical fiber knit or woven fabric base fabric layer, a composite base fabric layer of chemical fiber knit or woven fabric and/or needle-punched non-woven, or a spunbond non-woven base fabric layer; the carpet layer comprises a loop pile tufted layer formed on one side of the base fabric layer after tufting processing on the base fabric layer using chenille yarns, which is then processed to form the carpet layer with particulate form.

2. The chenille carpet as claimed in claim 1, further comprising backing layer comprising non-slip treated layer of hot melt glue, thermoplastic elastomer, foamed latex or composite non-slip functional fabrics and materials.

3. The chenille carpet as claimed in claim 1, wherein tufted layer is subjected to heating, rolling, softening treatment, cooling to form particulate piles of a loop pile of the tufted layer having a pile height of 3.5-45 mm.

4. The chenille carpet as claimed in claim 1, wherein
the base fabric layer is a composite base fabric layer formed from a needle-punched chemical fiber non-woven having a weight of 50-500 g/m²; or,
the base fabric layer is a composite base fabric layer formed from a chemical fiber knit or woven fabric having a weight of 70-350 g/m²; or,
the base fabric layer is a knit or woven base fabric layer having a weight of 50-350 g/m²; or,
the base fabric layer was spunbond non-woven base fabric layer having a weight of 50-350 g/m².

5. The chenille carpet as claimed in claim 1, wherein raw materials of the base fabric layer comprise one or more of chemical fibers, natural fibers and blended fibers;
the chenille yarn of the carpet layer is spun by taking two strands spun by staples or filaments with different fineness as core threads, and twisting with different twists to cut feather yarn with different fineness into different widths and sandwich the feather yarn between the two core threads; and
the chenille yarn material comprises one or more of polyester, nylon, cotton, and blended fibers.

6. The chenille carpet as claimed in claim 5, wherein the chenille yarn has a yarn count of: 2.6-0.2 Nm, a twist of: 280 T/M-800 T/M, a feather yarn count of: 30D-600D, and a feather yarn width of: 2-15 mm.

7. A preparation method for a chenille carpet, comprising:
S1. using a chenille yarn for tufting a base fabric layer to form a carpet layer on one side of the base fabric layer, so as to prepare a carpet blank; and
S2. treating the carpet blank such that a loop pile of the carpet layer forms a particulate pile.

8. The preparation method for a chenille carpet as claimed in claim 7, wherein the treating the carpet blank such that a loop pile of the carpet layer forms a particulate pile comprises:
placing the carpet blank in a ball rolling machine for heating, rolling, turning, softening treatment and cooling such that the loop pile of the carpet layer forms the particulate pile;
the type of the ball rolling machine comprises a steam type ball rolling machine, or an electrically heated diathermic oil type ball rolling machine, or a natural gas heated oil type ball rolling machine;
the ball rolling machine is internally provided with a rolling box, a plurality of heat dissipation holes for dissipating heat are distributed in a box wall of the rolling box; the rolling box in the ball rolling machine can be set to be in forward rotation or reverse rotation, a rotational speed can be set at fixed or variable frequency speed as desired, a rolling speed can be adjusted in a range of 10 r/min to 30 r/min, forward rotation or reverse rotation time is 5 min to 120 min, and forward rotation and reverse rotation direction can be automatically switched in a uniform cycle; and
the carpet blank of the carpet is naturally relaxed in the rolling box, and during rotation with the rolling box, the carpet blank of the carpet can freely fall after the carpet blank of the carpet reaches a certain height of an inner wall of the box and initiates next rotation, cyclically back and forth.

9. The preparation method for a chenille carpet as claimed in claim 8, wherein the ball rolling machine has a temperature setting range of 70°C to 200°C during heating and rolling, a softening treatment time of 5 s to 600 s, a cooling process of turning off the heating program, a fan naturally reduces the temperature of the carpet blank of the carpet through an internal cycle, and the internal box of the ball rolling machine still runs in an automatic uniform cycle and rotation direction switching form until the temperature down program is completed.

10. The preparation method for a chenille carpet as claimed in claim 7, wherein the treating the carpet blank to form a particulate pile of the loop pile of the carpet layer comprises:
placing the carpet blank into a setting machine, the carpet blank is blown by a blower of the setting machine and then wind-driven into an S-type air duct inside the setting machine, fluffed and heated drying of the carpet blank by the dryer, and high frequency rubbing of the carpet blank with the S-type duct during fluffing of the carpet blank to form the loop pile of the carpet layer into a particulate pile.

11. The preparation method for a chenille carpet as claimed in claim 10, wherein the setting machine comprises a shaker dryer setting machine;
the type of the shaker dryer setting machine comprises any of a steam shaker dryer setting machine, an electrically heated diathermic oil shaker dryer setting machine, and a natural gas heated oil shaker dryer setting machine; and
the first half of the shaker dryer setting machine is an S-curved wind duct unit and the second half is a mesh belt conveyor unit; and the flutter dryer setting machine having two or more powerful fans; the shaker dryer setting machines blow by means of a blower, creating wind forces which in turn bring the carpet blank into the setting machine.

12. The preparation method for a chenille carpet as claimed in Claim 10, wherein shaker dryer setting machine has a temperature control range of 100°C to 200°C and a running speed of 0.5 m/min to 10 m/min.

13. The preparation method for a chenille carpet as claimed in claim 7, wherein the treating the carpet blank to form the loop pile of the carpet layer into a particulate pile comprises:
placing the carpet blank into a dryer and heating tumble drying the carpet blank with the dryer to form a particulate pile from a looped pile of the carpet layer;
wherein the dryer is internally provided with a drum, and a plurality of heat dissipation holes are distributed in a drum wall; the dryer can accommodate a carpet blank weight of 15 KG to 250 KG; the rotation speed of the drum of the dryer is 29 r/min-35 r/min and the heating temperature is 70°C-180°C.

14. The preparation method for a chenille carpet as claimed in claim 7, wherein the treating the carpet blank to form the loop pile of the carpet layer into a particulate pile comprises:
placing the carpet blank into an internally arranged drum of a GQ-3500Z steam-type ball rolling machine for high temperature rubbing, and ball rolling treatment to form loop pile of carpet layer into particulate pile.

15. The preparation method for a chenille carpets as claimed inone of claims 7-14, wherein all actions in step S2 can be operated continuously by manual or automated procedures.

16. The preparation method for a chenille carpet as claimed in one of Claims 7-14, further comprising, after completion of step S2, spraying a surface of the carpet with softener working fluid in amount of 5-40 g/L of softener content and dosing in amount of 50-200 g/m².

17. The preparation method for a chenille carpet as claimed in one of the claims 7-14, wherein the method further comprises:
subjecting the carpet prepared in step S2 to bottom covering processing, i.e., with hot melt glue, thermoplastic elastomer, foam glue or composite other backing material alone or with non-slip treatment; and/or
subjecting the prepared chenille carpet to secondary processing; and the secondary process comprising a printing process.
